# EUROPÄISCHE PATENTSCHRIFT

(11) **EP 2 715 692 B1**
(45) Veröffentlichungstag und Bekanntmachung des Hinweises auf die Patenterteilung: **12.09.2018**
(21) Anmeldenummer: 12726784.7
(22) Anmeldetag: 01.06.2012
(51) Int. Cl.: G08B 13/196, G06T 3/40, H04N 5/232, H04N 5/77, H04N 7/18

(54) **ÜBERWACHUNGSEINRICHTUNG**
SURVEILLANCE DEVICE
DISPOSITIF DE SURVEILLANCE

(30) Priorität: 03.06.2011 DE 102011103378
(43) Veröffentlichungstag der Anmeldung: 09.04.2014
(73) Patentinhaber: Dallmeier electronic GmbH & Co. KG, 93047 Regensburg (DE)
(72) Erfinder: DALLMEIER, Dieter, 93186 Pettendorf (DE)
(74) Vertreter: Glück Kritzenberger Patentanwälte PartGmbB
(86) Internationale Anmeldenummer: PCT/EP2012/060438
(87) Internationale Veröffentlichungsnummer: WO 2012/164089

(56) Entgegenhaltungen:
- EP-A1- 1 593 999
- US-A1- 2010 299 630
- GAO C ET AL: "A hemispherical imaging camera", COMPUTER VISION AND IMAGE UNDERSTANDING, ACADEMIC PRESS, US, Bd. 114, Nr. 2, 1. Februar 2010 (2010-02-01), Seiten 168-178, XP026871173, ISSN: 1077-3142 [gefunden am 2009-03-14]
- MAJUMDER,GOPI,SEALES,FUCHS: "Immersive Teleconferencing : A New Algorithm to Generate Seamless Panoramic Video Imagery", ACM, 2 PENN PLAZA, SUITE 701 - NEW YORK USA, 31. Oktober 1999 (1999-10-31), Seiten 169-178, XP040105779, Orlando,FL,USA

## Beschreibung

Die vorliegende Erfindung betrifft eine Überwachungseinrichtung, welche eine oder mehrere Kameras aufweist, die wiederum eine Mehrzahl von Bildsensoren enthalten, wodurch die Überwachung einer großflächigen Szene ermöglicht wird.

Es sind Überwachungseinrichtungen bekannt, bei denen eine großflächige Szene mit einer feststehenden Kamera, die lediglich einen Bildsensor aufweist, in Echtzeit abgetastet wird, wobei entweder die Kamera mit einem Weitwinkelobjektiv ausgestattet ist, oder aber eine beweglich angeordnete Kamera zeilen- oder spaltenweise die Szene überstreift und dabei jeweils Einzelbilder aufgenommen werden, die später zu einem Gesamtbild zusammengefügt werden (Stitching). Im ersten Fall wird zwar ein Videostream in Echtzeit erzeugt, jedoch bedingt die Verwendung eines Weitwinkelobjektivs eine vergleichsweise niedrige Auflösung und, dass die aufgenommenen Bilder insbesondere am Rand stark verzerrt sind. Demgegenüber ist die resultierende Auflösung im zweiten Fall höher, jedoch gibt das zusammengesetzte Bild die Szene nicht in Echtzeit wieder, da die einzelnen Bilder jeweils zu einem anderen Zeitpunkt aufgenommen wurden. Hochaufgelöste, verzerrungsfreie Ausschnittsvergrößerungen der abgetasteten Szene in Echtzeit lassen sich in keinem der beiden Fälle erzeugen.

Aus der US 2011/0 058 036 A1 ist eine Überwachungseinrichtung bekannt, welche eine Weitwinkelkamera, mit der ein Übersichtsbild einer Szene aufgenommen wird, und eine Zoomkamera aufweist, mit der aus der Szene ein Ausschnittsbild vergrößert aufgenommen wird.

Die DE 199 56 266 A1 offenbart eine Überwachungsanlage mit einer stereoskopischen Kamera, die aus zwei stereoskopischen Kamerapaaren besteht, und einer der stereoskopischen Kamera zugeordneten Verfolgungskamera.

Aus der DE 103 10 636 A1 ist eine Überwachungsvorrichtung bekannt mit einem Multikameramittel, welches sich aus einer Vielzahl identischer Kameras zusammensetzt, und einem Objektfolgemittel.

Das Dokument EP1593999 offenbart eine Überwachungsvorrichtung mit einer Vielzahl an Kameras und Linsen.

Aufgabe der vorliegenden Erfindung ist es, ein Überwachungseinrichtung zu schaffen, mit welcher eine großflächige Szene in Echtzeit verzerrungsfrei abgetastet werden und verzerrungsfreie Ausschnittsvergrößerungen davon erzeugt werden können.

Die Lösung der Aufgabe erfolgt durch die Merkmale des Anspruchs 1. Vorteilhafte Weiterbildungen ergeben sich aus den Unteransprüchen.

Demgemäß wird eine Überwachungseinrichtung bereitgestellt mit: einer oder mehreren Kameras, welche jeweils eine Mehrzahl von Bildsensoren aufweisen, die derart ausgebildet sind, dass sie jeweils unterschiedliche Bereiche einer Szene mit variabler Gegenstandsweite in einem Objektraum abtasten und Bilddaten einer Abfolge von Bildern in einem Videostream erzeugen, wobei die Kameras jeweils eine Steuereinheit aufweisen, die derart ausgebildet ist, dass sie die Übertragung der Bilddaten der Bildsensoren auf ein Netzwerk durchführt; einer Steuereinrichtung, die derart ausgebildet ist, dass sie aus den Bilddaten der Bildsensoren einen zusammengesetzten Videostream und/oder mindestens einen Teilbereich davon zur Darstellung auf einer Anzeigevorrichtung oder in mindestens einem Fenster variabler Größe davon erzeugt; und einer Eingabeeinheit, welche derart ausgebildet ist, dass über sie der zur Anzeige vorgesehene Bereich der Szene sowie gegebenenfalls die Position und die Größe des mindestens einen Fensters festlegbar sind; wobei die Bildsensoren jeweils mit einer Optik derart ausgestattet sind, dass zu jedem Zeitpunkt und unabhängig von der Gegenstandsweite eine über das gesamte Sehfeld der Bildsensoren homogenisierte Auflösung des Objektraums bereitgestellt wird. Insbesondere können die Bildsensoren jeweils mit einer Optik ausgestattet sein, mit der unabhängig von der Gegenstandsweite dieselbe Auflösung erzielt wird.

Die Bildsensoren der einen oder mehreren Kameras einer weiteren Ausgestaltung der erfindungsgemäßen Überwachungseinrichtung, welche für unterschiedliche Gegenstandsweiten bestimmt sind, weisen Objektive mit unterschiedlicher Brennweite auf. Die Brennweite der Objektive kann dabei bedingt durch die Bauart fest vorgegeben sein.

Damit kann eine Szene optimal abgetastet werden, auch wenn deren Gegenstandsweite innerhalb des insgesamt zu beobachtenden Raumwinkels stark variiert.

Darüber hinaus ist bei einer weiteren Ausgestaltung der erfindungsgemäßen Überwachungseinrichtung die Steuereinrichtung ausgebildet, die Bilddaten der jeweiligen Bildsensoren derart zusammenzusetzen, dass sich benachbarte Bereiche der von den jeweiligen Bildsensoren abgetasteten Szene optisch überlappen, wobei sich auch deren Bereiche der Schärfentiefe überlappen. Dadurch wird eine weitere Anpassung an die Geometrie der zu erfassenden Szene erzielt, wobei der gesamte zur Anzeige vorgesehene Bereich der Szene unabhängig von der Gegenstandsweite mit Schärfentiefe abgebildet wird.

Damit die Szene an einem beliebigen Ort betrachtet werden kann, ist bei einer weiteren Ausgestaltung der erfindungsgemäßen Überwachungseinrichtung das Netzwerk, dem die Bilddaten der Bildsensoren übertragen werden, ein Video-IP-Netzwerk. Die Steuereinheit der jeweiligen Kameras ist dabei derart ausgebildet ist, dass sie die Übertragung der Bilddaten der Bildsensoren über das Video-IP-Netzwerk durchführt.

Die Steuereinrichtung ist bei einer weiteren Ausgestaltung der erfindungsgemäßen Überwachungseinrichtung derart ausgebildet, dass sie einen Helligkeitsabgleich der Bilddaten der Bildsensoren durchführt. Dadurch werden Helligkeitsunterschiede der Szene, insbesondere von benachbarten Bereichen, verringert.

Da sich die Helligkeit in verschiedenen Bereichen einer Szene oft stark unterscheidet, kann bei einer weiteren Ausgestaltung der erfindungsgemäßen Überwachungseinrichtung durch die Steuereinrichtung eine lokale Adaption der Belichtungsparameter vorgenommen werden. Insbesondere bildet die Steuereinheit die unterschiedlichen Helligkeitsbereiche auf einen höheren Dynamikbereich ab und nimmt die Dynamikkompression passend für ein Ausgabemedium vor.

Bei einer weiteren Ausgestaltung der erfindungsgemäßen Überwachungseinrichtung ist die Steuereinrichtung derart ausgebildet, dass sie eine Kodierung der Bilddaten der Bildsensoren dahingehend durchführt, dass die Bilddaten eine Kennung des sie erzeugenden Bildsensors und eine Kennung des Zeitpunkts des Abtastens des Bereichs der Szene enthalten. Dadurch wird das Zusammensetzen von Videostreams mehrerer Bildsensoren, welche Bereiche der Szene zum selben Zeitpunkt darstellen, erleichtert.

Darüber hinaus ist bei einer weiteren Ausgestaltung der erfindungsgemäßen Überwachungseinrichtung die Steuereinrichtung derart ausgebildet, dass sie den zusammengesetzten Videostream durch paralleles Nebeneinanderstellen der Videostreams der jeweiligen Bildsensoren erzeugt, wobei die Videostreams der jeweiligen Bildsensoren vollständig erhalten bleiben. Auf diese Weise gehen keine Informationen verloren, deren Bedeutung sich erst zu einem späteren Zeitpunkt herausstellt.

Entsprechend einer weiteren Ausgestaltung der erfindungsgemäßen Überwachungseinrichtung ist ein Speicher bereitgestellt, welcher bidirektional an das Netzwerk gekoppelt ist und der Speicherung der Bilddaten der jeweiligen Bildsensoren in separaten Bereichen dient. Die Steuereinrichtung ist dabei derart ausgebildet, dass sie die Bilddaten der Bildsensoren zur Anzeige in einem Live-Modus direkt von den jeweiligen Bildsensoren oder zur Anzeige in einem Playback-Modus aus dem Speicher abruft. Dadurch ist es möglich, die Szene zu einem beliebigen Zeitpunkt zu überwachen, wobei immer auf den selben Bestand an Bilddaten bzw. auf den selben Informationsgehalt zugegriffen wird.

Entsprechend einer Ausgestaltung der Überwachungseinrichtung der vorliegenden Erfindung sind die Bildsensoren der einen oder mehreren Kameras sind in n Reihen und m(n) Spalten angeordnet, wobei n und m ganze Zahlen sind und die Zahl der Spalten in jeder Reihe variieren kann. Somit lassen sich beliebig große Raumwinkel für die Überwachung realisieren. Die einzelnen Bildsensoren sind mit geringer Überlappung der erfassbaren jeweiligen Raumwinkelbereiche zueinander derart angeordnet bzw. ausgerichtet, dass die entsprechenden einzelnen Videostreams ohne aufwändige Nachbearbeitung zu einen parallelen Videostream zur Erzeugung einer Gesamtübersicht zusammengesetzt werden können.

Je nach Geometrie der zu erfassenden Szene sind die Bildsensoren der einen oder mehreren Kameras einer weiteren Ausgestaltung der erfindungsgemäßen Überwachungseinrichtung in einer ebenen oder gekrümmten Fläche angeordnet.

Die Bildsensoren sind bei einer weiteren Ausgestaltung der erfindungsgemäßen Überwachungseinrichtung derart nebeneinander angeordnet und ausgerichtet sind, dass geometrische Verzerrungen, insbesondere stürzende Linien, bei der Darstellung der Szene oder Bereichen davon nicht auftreten.

Um eine Anpassung auf unterschiedlich starken Lichteinfall zu erzielen, sind bei einer weiteren Ausgestaltung der erfindungsgemäßen Überwachungseinrichtung die Objektive jeweils mit einem Filter versehen. Insbesondere wird durch Integration eines Filtershifters eine Tag/Nacht-Kamera realisiert.

Oft ist es von großer Wichtigkeit, Änderungen innerhalb der Szene wahrzunehmen und zu deuten. Daher ist die Steuereinrichtung einer weiteren Ausgestaltung einer weiteren Ausgestaltung der erfindungsgemäßen Überwachungseinrichtung derart ausgebildet, dass sie ein sich bewegendes Objekt in den Videostreams erfasst, eine Klassifizierung des entsprechenden Objekts vornimmt und seine Verfolgung über verschiedene Videostreams hinweg durchführt. Die Klassifizierung und Verfolgung des erfassten sich bewegenden Objekts sind dabei jeweils optional vorgesehen.

Sämtliche Merkmale der Ausgestaltungen sind optional und können beliebig miteinander kombiniert werden.

Die vorliegende Erfindung wird in der nachfolgenden Beschreibung unter Bezugnahme auf die Zeichnung erläutert.
Fig. 1 zeigt ein Beispiel einer mit acht Sensormodulen aufgebauten Kamera einer bevorzugten Ausführungsform der vorliegen Erfindung;
Fig. 2 zeigt ein Beispiel von drei übereinander liegenden Kameras der bevorzugten Ausführungsform, wobei die Kameras jeweils mit acht Sensormodulen aufgebaut sind;
Fig. 3 zeigt ein Beispiel von neun nebeneinander und übereinander liegenden Kameras der bevorzugten Ausführungsform, wobei die Kameras jeweils mit acht Sensormodulen aufgebaut sind;
Fig. 4 zeigt ein Beispiel der bevorzugten Ausführungsform, wobei jeweils drei übereinander liegende Kameras an drei Orten installiert sind; die Kameras sind jeweils mit acht Sensormodulen aufgebaut; und
Fig. 5 zeigt ein Blockschaltbild der bevorzugten Ausführungsform der erfindungsgemäßen Überwachungseinrichtung.

Im Folgenden wird eine bevorzugte Ausführungsform der Überwachungseinrichtung der vorliegenden Erfindung beschrieben.

Bei der Überwachungseinrichtung der vorliegenden Erfindung sind:
- Kameras mit mehreren Bildsensoren aufgebaut;
- separate Videostreams der Bildsensoren erhalten die hohe maximale Bildrate, die mit einem Sensor erreichbar ist;
- ein zugeordnetes räumlich korreliertes Konzept der Darstellung auf dem Monitor ermöglicht die Skalierbarkeit des Systems zu einer größeren Kameraanzahl und flächendeckenderer Videoüberwachung:
   - es sind beliebig große Raumwinkel realisierbar;
   - eine große Detailauflösung in der Tiefe ist durch die Wahl der Objektive vorgebbar;
- es erfolgt kein Stitching, keine Korrektur der Bildinformation durch Änderung des originalen Bildmaterials in Bezug auf Lage und Farbverteilung (und im Normalfall Helligkeit) der Pixel; deshalb bleibt die Authentizität für die Gerichtsverwertbarkeit erhalten;
- durch eine vorteilhafte räumliche Anordnung der Sensoren relativ zu den Objektiven wird der Blickwinkel beeinflusst (Shift-Methode), so dass ein Herunterschauen ohne stürzende Linien möglich ist.

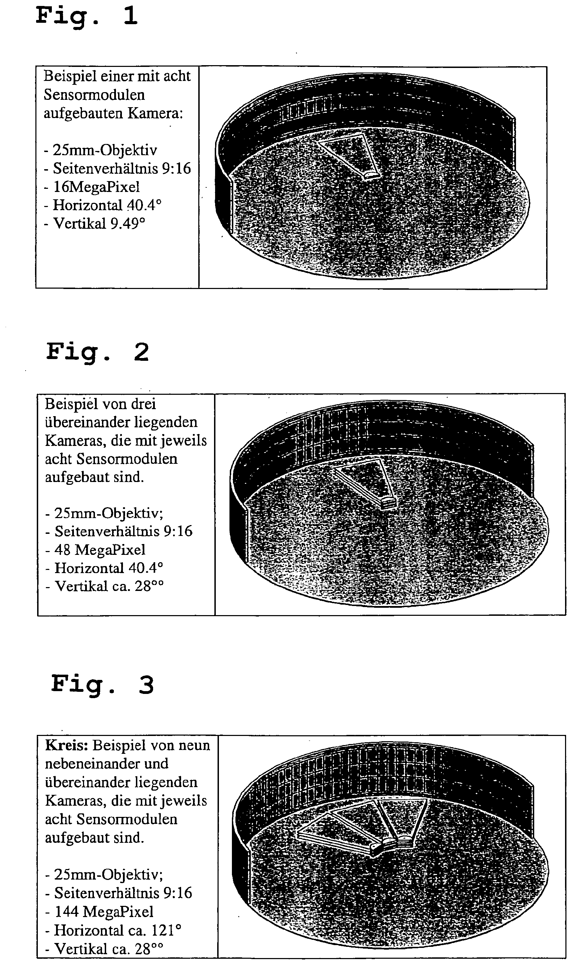

Im Folgenden geht es um die Skalierbarkeit im Aufnahmebereich der Kamera der erfindungsgemäßen Überwachungseinrichtung. Durch die spezielle mechanische Konstruktion der Lage von Objektiven und Sensormodulen wird in den abzubildenden Bildwinkeln skaliert. Konkret bedeutet dies, dass jedem der verbauten Sensormodule ein Raumwinkelbereich zugeordnet wird, den er abbildet. Dabei können von den einzelnen Sensormodulen verschiedene Auflösungen (720p; 1080p; ..) und Seitenverhältnisse (4:3; 3:4; 16:9; 9:16; ...) genutzt werden. Somit werden von der Kamera bei Verwendung von bis zu zehn Sensormodulen Seitenverhältnisse von "1:1.1" bis "1:17.7" erzielt. Auf diese Weise wird innerhalb des Kamera die Skalierbarkeit im Bereich von Ausschnitten der Raumbereiche genutzt, die die jeweiligen Sensoren aufzeichnen. In Fig. 1 ist ein Beispiel einer mit acht Sensormodulen aufgebauten Kamera dargestellt mit den Daten: 25mm-Objektiv, Seitenverhältnis 9:16, 16MegaPixel, horizontaler Raumwinkel 40.4°, vertikal Raumwinkel 9.49°. Dabei wird eine für die Korrelation von Aufnahme und Darstellung am Monitor günstige Konfiguration erzielt, die perspektivische Verzerrungen gering hält. Diese Eigenschaften ergeben sich nach den Gesetzen der Geometrischen Optik sowie unter der Verwendung der aus der Fotografie bekannten Shift-Methode. Auf eine durch Anwendung von mathematischen Formeln erfolgende weiterführende Nachbearbeitung des Bildinhaltes in der Aufzeichnung wird hier ausdrücklich verzichtet.

In Fig. 2 ist ein Beispiel von drei übereinander liegenden Kameras dargestellt, die mit jeweils acht Sensormodulen aufgebaut sind. Es ergeben sich dabei die Daten: 25mm-Objektiv, Seitenverhältnis 9:16, 48 MegaPixel, horizontaler Raumwinkel 40.4°, vertikal Raumwinkel ca. 28°. Entsprechend skaliert ein System aus mehreren Kameras, deren abgebildete Raumwinkel sich in entsprechender Weise ergänzen. Die räumliche Korrelation bei der Darstellung auf dem Monitor ist gewährleistet, weil zur Darstellung auf dem Monitor der Videostream des zugeordneten Sensormoduls über die entsprechende Rekorderspur zugeordnet werden kann.

In Fig. 3 ist ein Beispiel von neun nebeneinander und übereinander liegenden Kameras dargestellt, die mit jeweils acht Sensormodulen aufgebaut sind. Es ergeben sich dabei die Daten: 25mm-Objektiv, Seitenverhältnis 9:16, 144 MegaPixel, horizontaler Raumwinkel ca. 121°, vertikaler Raumwinkel ca. 28°.

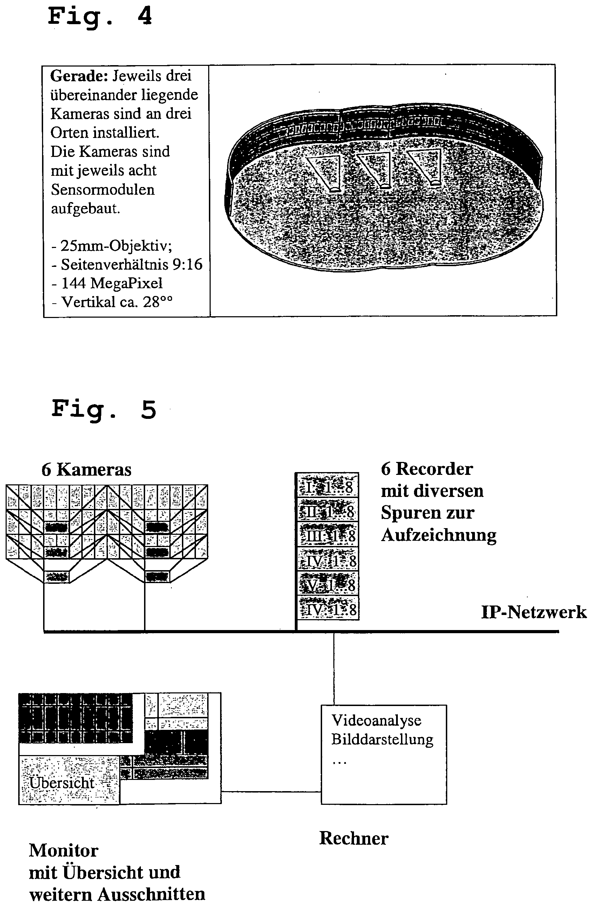

Diese nahezu verzeichnungsfreien einzelnen Videostreams können auch erzeugt werden, wenn sich die Kameras nicht am selben Ort, sondern in der Szenerie verteilt befinden. Diesbezüglich ist in Fig. 4 ein Beispiel dargestellt, bei dem jeweils drei übereinander liegende Kameras an drei Orten installiert sind. Die Kameras sind mit jeweils acht Sensormodulen aufgebaut. Es ergeben sich dabei die Daten: 25mm-Objektiv, Seitenverhältnis 9:16, 144 MegaPixel, vertikaler Raumwinkel ca. 28°.

Gemäß der vorliegen Erfindung werden mehrere Videosequenzen auf dem Monitor dargestellt (vergl. Fig. 5). Mit mehreren Sensoren, die zu einer oder mehreren Kameras gehören, wobei die Kameras auch als Panomera-Kameras bezeichnet werden, wird eine Szenerie in hoher Qualität abgebildet und aufgezeichnet. Ein leistungsstarker Rechner greift auf diese Klasse an Videostreams zu und interpretiert diese Inhalte gemäß der zugeordneten räumlichen Korrelation von Aufnahme und Darstellung. Der Rechner betreibt auch eine Videoanalyse, um auftretende Ereignisse zu klassifizieren. So können zum Beispiel bewegte Objekte erkannt und markiert werden. Dies erfolgt für die separaten Videostreams. Es können auf Grund der räumlichen Korrelation dieser einzelnen Videostreams aber auch Objekte automatisch verfolgt werden, die sich nacheinander durch die verschiedenen Raumwinkel der Videosensoren bewegen. Aus der räumlichen Korrelation geht eindeutig hervor, aus welchen Videostream heraus sich die Objekte in welchen anderen Videostream hinein bewegen. Für die Videoanalyse ist es in Hinblick auf die Verringerung des Rechenaufwandes sehr vorteilhaft, wenn mit einer Vielzahl von Videostreams einer "handlichen Größe" (z.B. HD-TV in1080p) gearbeitet werden kann. Speziell diese Eigenschaft wird mit dem erfindungsgemäßen Kameraprinzip hervorgehoben.

Vorteile dieses erfindungsgemäßen Konzeptes gegenüber Konzepten, die höhere Sensorauflösungen und Spezialoptiken zur Abbildung großer Bildwinkel benötigen:
- Der Aufbau einer hochauflösenden Panomera-Kamera ermöglicht einen gigantischen Weitwinkel ohne Sonderoptiken (75° oder 150°; 190° oder 360° ist kein Problem).
- Die Objektivanordnung ermöglicht es, bei den Objektiven eine Auflösung einzukaufen, die zur Auflösung des Sensors "1080p" nahezu angemessen ist.
- Es ergibt sich eine Skalierbarkeit des Systems von Kameras zur Erzielung beliebiger Seitenverhältnisse, die an die geometrischen Gegebenheiten des Überwachungsbereich angepasst werden können.
- Es handelt sich bei den Videostreams der Kameras mit 1080p in H.264 um einen verbreiteten Standard. Es sind mit diesem Konzept aber auch andere Arten von Videostreams vereinbar.
- Beliebige Seitenverhältnisse sind möglich, um im Wesentlichen die für die Überwachung relevanten Bereiche abzudecken.
- Nahezu verzeichnungsfreie Einzelbilder erfordern keine Nachbearbeitung zur Generierung der Videostreams und beanspruchen somit keine weitere Rechenleistung seitens der Kamera.
- Weil das Videomaterial jedes Einzelbildes nicht durch Perspektivkorrektur verrechnet (verfremdet) werden muss, bleiben alle von dieser Kamera erzeugten Videodaten authentisch. Somit bleiben die Anforderungen an Gerichtsverwertbarkeit gewährleistet. Gerade dieser Aspekt stellt eine grundlegende Eigenschaft zum Aufbau von professionellen Überwachungssystemen dar.
- Weil auf Grund der geometrischen Verhältnisse von den innerhalb des Kameramoduls verbauten Sensoren relativ verzeichnungsfrei abgebildet wird, können die einzelnen Videosequenzen benachbarter Module ohne weitere Berechnung bei der Darstellung "1:1" (Originalgröße) durch eine einfache Überlagerung auf dem Monitor anzeigt werden. Auf eine Bildkorrektur (relative Verschiebung von Pixeln gegeneinander oder Farbkorrekturen) wird zur Darstellung der Bilder auf dem Monitor verzichtet. Somit wird bei der Wiedergabe des Videomaterial keine Rechenleistung zur Perspektivkorrektur benötigt.
- Es können preiswerte Objektive (mit großem Bildkreis, weil es ½"-Optiken sind) verwendet werden.
- Verzeichnungsfreies "nach unten schauen" ist möglich, weil unter Verwendung der Shift-Methode stürzende Linien vermieden werden.
- Das System lässt sich auch entsprechend der Auflösung in die Tiefe skalieren, wenn die Anforderungen durch die Anwendung gegeben sind. Im Allgemeinen werden Objektive von 6mm, 9mm, 12mm und 25mm verwendet.
- Eine hohe Bildfolge von bis zu 30frames/second ist möglich.
- Das Lowlight-Verhalten ist noch annehmbar.
- Die Integration eines Filtershifters ist möglich, um eine echte DayNightKamera zu bauen. Gegenüber herkömmlichen Produkten wird dieses Konzept eine bessere Empfindlichkeit aufweisen.
- Mit der Installation einer erfindungsgemäßen Kamera hat man schon eine große Anzahl herkömmlicher Kameras mit einem Bildsensor installiert und zueinander ausgerichtet, wenn man diese Installation mit der Installation von einzelnen herkömmlichen Kameras vergleicht.

Bei dem erfindungsgemäßen Konzept handelt es sich um Festbrennweiten, und die einzelnen Kameramodule wurden vorkonfiguriert gegeneinander in horizontaler Richtung verkippt. Eine gefertigte Kamera ist somit in ihrem Bildwinkel nicht mehr verstellbar. Das bedeutet unter Umständen, dass der Ort, an dem die Kamera befestigt wird, gut ausgewählt sein muss. Wenn demgegenüber der Montageplatz der Kamera bereits festgelegt wurde, dann muss anhand der Erfordernisse für die Detailauflösung und den benötigten Bildwinkel speziell untersucht werden, welche Kameraausfertigung zu verwenden ist.

Das außergewöhnliche Konzept des Kamerasystems soll nunmehr mit den charakteristischen Eigenschaften dargestellt werden.
A. Räumliche Anordnung von Objektiven innerhalb der Kamera; Skalierbares System von Kameras
   Es wird grundsätzlich zwischen drei Kategorien der zu überwachenden Fläche unterschieden:
   - F1: Horizontale Fläche (z.B. Großparkplatz);
   - F2: Vertikale Fläche (z.B. Tribüne im Stadion);
   - F3: Strecke (z.B. Grenzzaun oder Details längs einer Verkehrsverbindung; Autobahn).

   Im Fall der horizontalen Fläche (F1) und der Strecke (F3) wird ein neuartiges, hier für die Kameratechnik zum ersten Mal dargestelltes optisches Prinzip verwendet, das eine "ökonomische Verteilung von Pixeln pro Fläche" ermöglicht, um den technischen Aufwand bei geforderter hoher räumlicher Auflösung auf der Fläche gering zu halten. Es geht darum, die Mega-Pixel als eine wertvolle Ressource nicht für Raumbereiche mit geringem Interesse zu verschwenden, sondern mehr konzentriert in derartige Raumbereiche zu legen, die eine höhere Auflösung an Pixeln pro Raumwinkel erfordern.
   - Ein oder zwei Module der Kamera erzeugen ein Übersichtsbild der von der Kamera abgebildeten Bildwinkel.
   - Flächen mit hoher Relevanz werden, wenn möglich, mit dem Objektiv der längsten verbauten Brennweite abgebildet.
   - Das Objektiv mit der längsten Brennweite schaut mit dem oberen Bildwinkel nahezu waagerecht in die Ferne, um im Prinzip auf große Entfernungen abbilden zu können.
   - Verwendung verschiedener Brennweiten in der Kamera im Fall F1 und F3: Weil dieses Objektiv einen entsprechend geringen vertikalen Bildwinkel besitzt, die Fläche unterhalb des von der längsten Brennweite abgebildeten Raumwinkels zur Kamera eine geringere Entfernung besitzt, wird unterhalb der längsten Brennweite mit einer etwas kürzeren Brennweite (grob die Hälfte der Brennweite) ergänzt.
   - Es wird eine geringe Überlappung der mit den Einzelsensoren abgebildeten Raumwinkelbreiche in die räumliche Konstruktion der Panomera-Kamera einbezogen.
   - In horizontaler Richtung werden die Sensoren/Objektive innerhalb der Kamera sowie die einzelnen Panomeras einfach ergänzt.
   - In vertikaler Richtung wird mit Hilfe der bekannten Shift-Methode ein Kippen des abgebildeten Raumwinkels nach oben oder unten durch einen Versatz des Sensors gegenüber dem Objektiv nach unten oder oben bewirkt. Die verwendeten Objektive besitzen einen entsprechend großen Bildkreis und ihre Verzeichnung ist in Relation zur Überlappung der Raumwinkelbereiche gering genug.
   - Die Shift-Methode vermeidet das Problem der Stürzenden Linien. Die Objektive sind horizontal ausgerichtet.
   - Eine Abweichung von der horizontalen Ausrichtung der Objektive wird genutzt, wenn es auf Grund der Perspektive erforderlich ist.
B. Das Parallel-Streaming-Konzept vermeidet gegenüber anderen Multi-Sensor-Konzepten den Flaschenhals im Bereich "1a: Anzahl der Bildpunkte (räumliche Auflösung); 1b: Bildrate (zeitliche Auflösung); 1c: Datenrate (Bitrate)". Herkömmliche Multisensorkameras setzen aus Einzelbildern der Sensoren, teilweise mittels Stitching-Technik einen einzigen IP-Stream zusammen, der in Bezug auf die Videostream-Charakteristika:
   - 1a: hohe Auflösung (erhöhte Bitrate; verringerte Bildrate)
   - 1b: hohe Bildrate (erhöhte Bitrate; verringerte Auflösung)
   - 1c: hohe Datenrate (durch die Leistungsfähigkeit des Encoders innerhalb der Kamera stark begrenzt)
   einen Kompromiss darstellt. Wenn zum Beispiel die höchste räumliche Auflösung erwünscht wird, dann fällt die Bildrate drastisch.
   Gemäß der vorliegenden Erfindung umgeht die Kamera jeglichen Kompromiss (zuvor Flaschenhals genannt) durch parallele Bilddatenverarbeitung, um die drei aufgezählten Aspekte (1a, 1b, 1c) auf hohem Leistungsniveau nahezu unabhängig voneinander wählen zu können. Die eingestellten Parameter unter 1a, 1b, 1c entsprechen dem hohen Leistungsniveau, was für Mulit-Sensor-Kameras einzigartig ist. Die Konsequenzen hieraus sind die folgenden Aspekte im Bereich der Übertragung, Aufnahme, Playback, Gerichtsverwertbarkeit, Aufschaltung:
   - 2a: Es wird kein Stitching von Einzelbildern aneinander hängender Raumbereiche verwendet, sondern eine Vielzahl in diesem Sinne unbearbeiteter einzelne Videostreams werden zu den jeweiligen Bildsensoren gehörig in das IP-Netzwerk übertragen.
   - 2b: Der zum einzelnen Bildsensor gehörige Videostream ist mit Angabe der IP-Adresse eindeutig zuzuordnen.
   - 2c: Mit einer entsprechenden Vielzahl von Rekorderspuren wird das Bildmaterial des einzelnen Bildsensors aufgezeichnet. Somit ist das Bildmaterial des Einzelsensors weitere Einschränkungen (kein Flaschenhals) unter 1a, 1b, 1c aufgezeichnet. Die Bildinformation weist die maximale Auflösung auf. Der Rekorder besitzt eine IP-Adresse und die zugeordnete Rekorderspur ist eindeutig durch ihre Nummer identifizierbar. Somit steht auch im Playback die maximale Auflösung des Bildmaterials zur Verfügung. Dies ist ein deutlicher Unterschied gegenüber anderen Multi-Sensor-Kameras, deren zusammengesetzter Einzel-Videostream immer einen Kompromiss unter 1a, 1b, 1c (Flaschenhals) darstellt.
   - 2d: Hieraus folgt, dass das Aufgezeichnete kompromisslos hoch aufgelöst aufgezeichnete originäre Bildmaterial des Einzelsensors keinen Prozeduren der Veränderung durch mathematischen Transformationen zur Lage und Farbwert (sowie im Normalfall Helligkeit) von Pixeln (wie bei Stitching-Methoden üblich) unterworfen wird. Somit bleibt die Echtheit des Bildmaterials und die Gerichtsverwertbarkeit im Prinzip erhalten.
   - 2e: Die Kameras sind multicast-fähig, so dass sich verschiedene Benutzer gleichzeitig aufschalten können.
C. Darstellung auf dem Monitor, Overview, Räumliche Korrelation "Bildwinkel-Monitorfläche", Region of Interest, Motion-Tracking:
   Das erfindungsgemäße Prinzip der Kamera besteht in einer vom Nutzer "on the fly", also nach aktuellem Interesse, flexibel wählbaren Darstellung von Bildmaterial auf dem Monitor.
   - C1: Das Gesamtbild wird meist aus mehreren Übersichtskameras durch eine Überlagerung der geeignet skalierten Einzelbilder dargestellt. Bilder werden mit geeigneter Skalierung der Größe und entsprechendem räumlichen Versatz überlagert. Das ergibt den Eindruck eines Gesamtbildes. Es gibt in einem Ensemble von Kameras kein Gesamtbild, das durch Stitching erzeugt wurde.
   - C2: Der Nutzer aus dem Reservoir von Videostreams mit seinem Blick auf den Monitor in einer natürlichen räumlichen Zuordnung, die über zugeordnete IP-Adressen zwischen den Raumwinkelbereichen der aufnehmenden Sensoren und der auf dem Bildschirm eingenommen Fläche vermittelt.

Es besteht die Möglichkeit, separate Arbeitsplätze der Videoüberwachung mit gesonderten Rechten und Aufschaltberechtigungen zu Untergruppen dieser Videostreams vergeben zu können.

Entsprechend der bevorzugten Ausführungsform der vorliegenden Erfindung wird eine Überwachungseinrichtung bereitgestellt mit:
einer oder mehreren Kameras, welche jeweils eine Mehrzahl von Bildsensoren aufweisen, die derart ausgebildet sind, dass sie jeweils unterschiedliche Bereiche einer Szene mit variabler Gegenstandsweite in einem Objektraum abtasten und Bilddaten einer Abfolge von Bildern in einem Videostream erzeugen, wobei die Kameras jeweils eine Steuereinheit aufweisen, die derart ausgebildet ist, dass sie die Übertragung der Bilddaten der Bildsensoren auf ein Netzwerk durchführt;
einer Steuereinrichtung, die derart ausgebildet ist, dass sie aus den Bilddaten der Bildsensoren einen zusammengesetzten Videostream und/oder mindestens einen Teilbereich davon zur Darstellung auf einer Anzeigevorrichtung oder in mindestens einem Fenster variabler Größe davon erzeugt; und
einer Eingabeeinheit, welche derart ausgebildet ist, dass über sie der zur Anzeige vorgesehene Bereich der Szene sowie gegebenenfalls die Position und die Größe des mindestens einen Fensters festlegbar sind;
wobei die Bildsensoren jeweils mit einer Optik derart ausgestattet sind, dass zu jedem Zeitpunkt und unabhängig von der Gegenstandsweite eine über das gesamte Sehfeld der Bildsensoren homogenisierte Auflösung des Objektraums bereitgestellt wird; anders ausgedrückt, die Kamera stellt zu jedem Zeitpunkt eine über das gesamte Sehfeld homogenisierte Auflösung des Objektraums bereit. Insbesondere können die Bildsensoren jeweils mit einer Optik ausgestattet sein, mit der unabhängig von der Gegenstandsweite dieselbe Auflösung oder zumindest jedoch nahezu dieselbe Auflösung erzielt wird.

Die Bildsensoren, welche für unterschiedliche Gegenstandsweiten bestimmt sind, weisen Objektive mit unterschiedlicher Brennweite auf. Die Brennweite der Objektive kann dabei bedingt durch die Bauart fest vorgegeben sein; mit anderen Worten, die Objektive der jeweiligen Bildsensoren können eine Festbrennweite aufweisen.

Die Steuereinrichtung veranlasst, dass die Bilddaten der jeweiligen Bildsensoren derart zusammengesetzt werden, dass sich benachbarte Bereiche der von den jeweiligen Bildsensoren abgetasteten Szene optisch überlappen, wobei sich auch deren Bereiche der Schärfentiefe überlappen. Dadurch wird eine weitere Anpassung an die Geometrie der zu erfassenden Szene erzielt, wobei der gesamte zur Anzeige vorgesehene Bereich der Szene unabhängig von der Gegenstandsweite mit Schärfentiefe abgebildet wird. Erreicht wird dies dadurch, dass aus den benachbarten Bereichen der von den jeweiligen Bildsensoren abgetasteten Szene jeweils die Bereiche mit Schärfentiefe extrahiert werden und die extrahierten Bereiche mit kleinen Überlappungen neben- bzw. übereinandergesetzt (d.h. zusammengesetzt) werden. Um auf diese Weise ein geschlossenes und damit lückenloses Gesamtbild der abgetasteten Szene oder Teilbereichen davon zu erlangen, sind die Bildsensoren derart ausgebildet und ausgerichtet, dass sich die benachbarten abzutastenden Bereiche der jeweiligen Bildsensoren vor dem Extrahieren der Bereiche mit Schärfentiefe weiträumiger überlappen als nach dem Zusammensetzen. Die Überlappungen der Bereiche mit Schärfentiefe nach dem Zusammensetzen können auf null reduziert sein.

Die Steuereinheit der jeweiligen Kameras ist derart ausgebildet, dass sie die Übertragung der Bilddaten der Bildsensoren auf bzw. über ein Video-IP-Netzwerk durchführt.

Darüber hinaus ist die Steuereinrichtung derart ausgebildet, dass sie einen Helligkeitsabgleich der Bilddaten der Bildsensoren durchführt. Die Steuereinheit kann veranlassen, dass eine lokale Adaption der Belichtungsparameter der Bildsensoren wie beispielsweise Blende, Belichtungszeit und/oder Signalverstärkung (Gain) vorgenommen wird. Die Steuereinheit kann dabei insbesondere unterschiedliche Helligkeitsbereiche auf einen höheren Dynamikbereich abbilden und eine Dynamikkompression passend für ein Ausgabemedium vornehmen.

Ferner ist die Steuereinrichtung derart ausgebildet, dass sie eine Kodierung der Bilddaten der Bildsensoren dahingehend durchführt, dass die Bilddaten eine Kennung des sie erzeugenden Bildsensors und eine Kennung des Zeitpunkts des Abtastens des Bereichs der Szene enthalten.

Des Weiteren ist die Steuereinrichtung derart ausgebildet, dass sie den zusammengesetzten Videostream durch paralleles Nebeneinanderstellen der Videostreams der jeweiligen Bildsensoren erzeugt, wobei die Videostreams der jeweiligen Bildsensoren vollständig erhalten bleiben.

Ein Speicher ist bidirektional an das Netzwerk gekoppelt und dient der Speicherung der Bilddaten der jeweiligen Bildsensoren in separaten Bereichen, wobei die Steuereinrichtung derart ausgebildet ist, dass sie die Bilddaten der Bildsensoren zur Anzeige in einem Live-Modus direkt von den jeweiligen Bildsensoren oder zur Anzeige in einem Playback-Modus aus dem Speicher abruft.

Die Bildsensoren sind derart nebeneinander angeordnet und ausgerichtet, dass geometrische Verzerrungen nicht auftreten.

Die Steuereinrichtung derart ausgebildet ist, dass sie ein sich bewegendes Objekt in den Videostreams erfasst.

Darüber hinaus ist die Steuereinrichtung derart ausgebildet, dass sie eine Klassifizierung des erfassten sich bewegenden Objekts durchführt.

Ferner ist die Steuereinrichtung derart ausgebildet, dass sie eine Verfolgung des erfassten sich bewegenden Objekts über verschiedene Videostreams durchführt.

Die Bildsensoren der einen oder mehreren Kameras sind in n Reihen und m Spalten angeordnet, wobei n und m ganze Zahlen sind.

Je nach Geometrie der zu erfassenden Szene sind die Bildsensoren der einen oder mehreren Kameras einer weiteren Ausgestaltung der erfindungsgemäßen Überwachungseinrichtung in einer ebenen oder gekrümmten Fläche angeordnet.

Die Objektive sind jeweils mit einem Filter versehen. Insbesondere wird durch Integration eines Filtershifters eine Tag/Nacht-Kamera realisiert.

Die o.a. Merkmale der erfindungsgemäßen Überwachungseinrichtung gemäß dem Haupt- und den Unteransprüchen können beliebig miteinander kombiniert werden.

## Patentansprüche

1. Überwachungseinrichtung mit:
einer oder mehreren Kameras, welche jeweils eine Mehrzahl von Bildsensoren aufweisen, die derart ausgebildet sind, dass sie jeweils unterschiedliche Bereiche einer Szene mit variabler Gegenstandsweite in einem Objektraum abtasten und Bilddaten einer Abfolge von Bildern in einem Videostream erzeugen, wobei die Kameras jeweils eine Steuereinheit aufweisen, die derart ausgebildet ist, dass sie die Übertragung der Bilddaten der Bildsensoren auf ein Netzwerk durchführt;
einer Steuereinrichtung, die derart ausgebildet ist, dass sie aus den Bilddaten der Bildsensoren einen zusammengesetzten Videostream und/oder mindestens einen Teilbereich davon zur Darstellung auf einer Anzeigevorrichtung oder in mindestens einem Fenster variabler Größe davon erzeugt; und
einer Eingabeeinheit, welche derart ausgebildet ist, dass über sie der zur Anzeige vorgesehene Bereich der Szene sowie gegebenenfalls die Position und die Größe des mindestens einen Fensters festlegbar sind;
wobei die Bildsensoren jeweils mit einer Optik derart ausgestattet sind, dass zu jedem Zeitpunkt und unabhängig von der Gegenstandsweite eine über das gesamte Sehfeld der Bildsensoren homogenisierte Auflösung des Objektraums bereitgestellt wird, und
die Bildsensoren, welche für unterschiedliche Gegenstandsweiten bestimmt sind, Objektive mit unterschiedlicher Festbrennweite aufweisen.

2. Überwachungseinrichtung nach einem der vorhergehenden Ansprüche, **dadurch gekennzeichnet, dass** die Steuereinrichtung ausgebildet ist, die Bilddaten der jeweiligen Bildsensoren derart zusammenzusetzen, dass sich benachbarte Bereiche der von den jeweiligen Bildsensoren abgetasteten Szene optisch überlappen, wobei sich auch deren Bereiche der Schärfentiefe überlappen.

3. Überwachungseinrichtung nach einem der vorhergehenden Ansprüche, **dadurch gekennzeichnet, dass** die Steuereinheit der jeweiligen Kameras derart ausgebildet ist, dass sie die Übertragung der Bilddaten der Bildsensoren auf ein Video-IP-Netzwerk durchführt.

4. Überwachungseinrichtung nach einem der vorhergehenden Ansprüche, **dadurch gekennzeichnet, dass** die Steuereinrichtung derart ausgebildet ist, dass sie einen Helligkeitsabgleich der Bilddaten der Bildsensoren durchführt.

5. Überwachungseinrichtung nach einem der vorhergehenden Ansprüche, **dadurch gekennzeichnet, dass** die Steuereinrichtung derart ausgebildet ist, dass sie eine lokale Adaption der Belichtungsparameter der Bildsensoren durchführt, wobei die Steuereinrichtung insbesondere unterschiedliche Helligkeitsbereiche auf einen höheren Dynamikbereich abbildet und eine Dynamikkompression passend für ein Ausgabemedium vornimmt.

6. Überwachungseinrichtung nach einem der vorhergehenden Ansprüche, **dadurch gekennzeichnet, dass** die Steuereinrichtung derart ausgebildet ist, dass sie eine Kodierung der Bilddaten der Bildsensoren dahingehend durchführt, dass die Bilddaten eine Kennung des sie erzeugenden Bildsensors und eine Kennung des Zeitpunkts des Abtastens des Bereichs der Szene enthalten.

7. Überwachungseinrichtung nach einem der vorhergehenden Ansprüche, **dadurch gekennzeichnet, dass** die Steuereinrichtung derart ausgebildet ist, dass sie den zusammengesetzten Videostream durch paralleles Nebeneinanderstellen der Videostreams der jeweiligen Bildsensoren erzeugt, wobei die Videostreams der jeweiligen Bildsensoren vollständig erhalten bleiben.

8. Überwachungseinrichtung nach einem der vorhergehenden Ansprüche, **gekennzeichnet durch** einen Speicher, welcher bidirektional an das Netzwerk gekoppelt ist und der Speicherung der Bilddaten der jeweiligen Bildsensoren in separaten Bereichen dient, wobei die Steuereinrichtung derart ausgebildet ist, dass sie die Bilddaten der Bildsensoren zur Anzeige in einem Live-Modus direkt von den jeweiligen Bildsensoren oder zur Anzeige in einem Playback-Modus aus dem Speicher abruft.

9. Überwachungseinrichtung nach einem der vorhergehenden Ansprüche, **dadurch gekennzeichnet, dass** die Bildsensoren derart nebeneinander angeordnet und ausgerichtet sind, dass geometrische Verzerrungen nicht auftreten.

10. Überwachungseinrichtung nach einem der vorhergehenden Ansprüche, **dadurch gekennzeichnet, dass** die Steuereinrichtung derart ausgebildet ist, dass sie ein sich bewegendes Objekt in den Videostreams erfasst.

11. Überwachungseinrichtung nach Anspruch 10, **dadurch gekennzeichnet, dass** die Steuereinrichtung derart ausgebildet ist, dass sie eine Klassifizierung des erfassten sich bewegenden Objekts durchführt.

12. Überwachungseinrichtung nach Anspruch 10 oder 11, **dadurch gekennzeichnet, dass** die Steuereinrichtung derart ausgebildet ist, dass sie eine Verfolgung des erfassten sich bewegenden Objekts über verschiedene Videostreams durchführt.

## Claims

1. A surveillance device comprising:
one or more cameras, which each comprise a plurality of image sensors, which are constituted such that they each scan different regions of a scene with a variable object distance in an object space and generate image data of a sequence of images in a video stream, wherein the cameras each comprise a control unit, which is constituted such that it performs the transmission of the image data of the image sensors to a network;
a control device, which is constituted such that it generates from the image data of the image sensors a composite video stream and/or at least one section thereof for display on a display device or in at least one window of variable size thereof; and
an input unit, which is constituted such that the region of the scene intended for the display and, optionally, the position and the size of the at least one window can be fixed by means of said input unit;
wherein the image sensors are each equipped with an optical system, such that a resolution of the object space homogenised over the entire visual field of the image sensors is provided at any time and irrespective of the object distance, and
the image sensors, which are intended for different object distances, comprise lenses with different fixed focal lengths.

2. The surveillance device according to any one of the preceding claims, **characterised in that** the control device is constituted to combine the image data of the respective image sensors, such that adjacent regions of the scene scanned by the respective image sensors optically overlap, wherein their ranges of the depth of focus also overlap.

3. The surveillance device according to any one of the preceding claims, **characterised in that** the control unit of the respective cameras is constituted such that it performs the transmission of the image data of the image sensors to a video IP network.

4. The surveillance device according to any one of the preceding claims, **characterised in that** the control device is constituted such that it performs a brightness comparison of the image data of the image sensors.

5. The surveillance device according to any one of the preceding claims, **characterised in that** the control device is constituted such that it carries out a local adaptation of the exposure parameters of the image sensors, wherein the control device in particular images different brightness ranges onto a higher dynamic range and performs a dynamic compression suitable for an output medium.

6. The surveillance device according to any one of the preceding claims, **characterised in that** the control device is constituted such that it carries out a coding of the image data of the image sensors, in such a way that the image data contain an identifier of the image sensor generating them and an identifier of the time of the scanning of the region of the scene.

7. The surveillance device according to any one of the preceding claims, **characterised in that** the control device is constituted such that it generates the composite video stream by a parallel juxtaposition of the video streams of the respective image sensors, wherein the video streams of the respective image sensors are completely preserved.

8. The surveillance device according to any one of the preceding claims, **characterised by** a memory, which is coupled bidirectionally to the network and serves to store the image data of the respective image sensors in separates regions, wherein the control device is constituted such that it retrieves from the memory the image data of the image sensors for display in a live mode directly from the respective image sensors or for display in a playback mode.

9. The surveillance device according to any one of the preceding claims, **characterised in that** the image sensors are arranged and aligned beside one another in such a way that geometrical distortions do not occur.

10. The surveillance device according to any one of the preceding claims, **characterised in that** the control device is constituted such that it detects a moving object in the video streams.

11. The surveillance device according to claim 10, **characterised in that** the control device is constituted such that it carries out a classification of the detected moving object.

12. The surveillance device according to claim 10 or 11, **characterised in that** the control device is constituted such that it carries out tracking of the detected moving object via different video streams.

## Revendications

1. Dispositif de surveillance comprenant :
une ou plusieurs caméras, lesquelles comportent chacune une pluralité de capteurs d'image qui sont conçus de sorte à balayer chacun des zones différentes d'une scène avec une distance d'objet variable dans un espace d'objet et à créer des données d'image d'une séquence d'images dans un flux vidéo, les caméras comportant chacune une unité de commande qui est conçue de sorte à procéder à la transmission des données d'image des capteurs d'image sur un réseau ;
un dispositif de commande, qui est conçu pour générer à partir des données d'image des capteurs d'image un flux vidéo recomposé et/ou au moins une zone partielle de celui-ci, pour la représentation sur un dispositif d'affichage ou dans au moins une fenêtre de dimensions variables de celui-ci ; et
une unité de saisie, laquelle est conçue de sorte à permettre de fixer par son intermédiaire la zone de la scène prévue pour l'affichage, ainsi que le cas échéant la position et les dimensions de l'au moins une fenêtre ;
les capteurs d'image étant équipés chacun d'une optique, de telle sorte qu'à chaque instant et indépendamment de la distance de l'objet soit mise à disposition une résolution de l'espace d'objets homogénéisée sur l'ensemble du champ de vision des capteurs d'image, et
les capteurs d'image, lesquels sont destinés pour différentes distances d'objets comportant des objectifs avec différente longueur focale fixe.

2. Dispositif de surveillance selon l'une quelconque des revendications précédentes, **caractérisé en ce que** le dispositif de commande est conçu pour recomposer les données d'image des capteurs d'image de telle sorte que des zones voisines de la scène balayée par les capteurs d'image respectifs se chevauchent visuellement, sachant qu'également leurs zones de profondeur de champs se chevauchent.

3. Dispositif de surveillance selon l'une quelconque des revendications précédentes, **caractérisé en ce que** l'unité de commande des caméras respectives est conçue de sorte à procéder à la transmission des données d'image des capteurs d'image sur un réseau vidéo IP.

4. Dispositif de surveillance selon l'une quelconque des revendications précédentes, **caractérisé en ce que** le dispositif de commande est conçu de sorte à procéder à une mise au point de la luminosité des données d'image des capteurs d'image.

5. Dispositif de surveillance selon l'une quelconque des revendications précédentes, **caractérisé en ce que** le dispositif de commande est conçu de sorte à procéder à une adaptation locale des paramètres d'éclairage des capteurs d'image, dans lequel le dispositif de commande reproduit notamment différentes zones de luminosité sur une gamme dynamique plus élevée et procède à une compression dynamique adaptée pour un média d'édition.

6. Dispositif de surveillance selon l'une quelconque des revendications précédentes, **caractérisé en ce que** le dispositif de commande est conçu de sorte à procéder à un codage des données d'image des capteurs d'image dans le sens où les données d'image contiennent une identification du capteur qui les génère et une identification du moment du balayage de la zone de la scène.

7. Dispositif de surveillance selon l'une quelconque des revendications précédentes, **caractérisé en ce que** le dispositif de commande est conçu de sorte à générer le flux vidéo recomposé par mise côte à côte à la parallèle des flux vidéo des capteurs d'image respectifs, sachant que les flux vidéo des capteurs d'image respectifs restent totalement intacts.

8. Dispositif de surveillance selon l'une quelconque des revendications précédentes, **caractérisé par** une mémoire, laquelle est connectée de manière bidirectionnelle sur le réseau et sert à la mémorisation des données d'image des capteurs d'image respectifs dans des zones différentes, dans lequel le dispositif de commande est conçu de sorte à interroger les données d'image des capteurs d'image pour les afficher en un mode live directement à partir des capteurs d'image respectifs ou pour les afficher en un mode play-back à partir de la mémoire.

9. Dispositif de surveillance selon l'une quelconque des revendications précédentes, **caractérisé en ce que** les capteurs d'image sont placés côte à côte et orientés de telle sorte que des déformations géométriques ne se produisent pas.

10. Dispositif de surveillance selon l'une quelconque des revendications précédentes, **caractérisé en ce que** le dispositif de commande est conçu de sorte à détecter des objets qui se déplacent dans les flux vidéo.

11. Dispositif de surveillance selon la revendication 10, **caractérisé en ce que** le dispositif de commande est conçu de sorte à procéder à une classification de l'objet en mouvement détecté.

12. Dispositif de surveillance selon la revendication 10 ou 11, **caractérisé en ce que** le dispositif de commande est conçu pour procéder à un suivi de l'objet en mouvement détecté via différents flux vidéo.
